# EUROPÄISCHE PATENTSCHRIFT

(11) **EP 3 723 385 B1**
(45) Veröffentlichungstag und Bekanntmachung des Hinweises auf die Patenterteilung: **20.10.2021**
(21) Anmeldenummer: 20156304.6
(22) Anmeldetag: 10.02.2020
(51) Int. Cl.: H04R 1/10

(54) **HÖRGERÄT UND VERFAHREN ZUM BETREIBEN EINES SOLCHEN HÖRGERÄTS**
HEARING AID AND METHOD FOR OPERATING SAME
APPAREIL AUDITIF ET PROCÉDÉ DE FONCTIONNEMENT D'UN TEL APPAREIL AUDITIF

(30) Priorität: 09.04.2019 DE 102019205040
(43) Veröffentlichungstag der Anmeldung: 14.10.2020
(73) Patentinhaber: Sivantos Pte. Ltd., Singapore 539775 (SG)
(72) Erfinder: HUSUNG, Kunibert, 91052 Erlangen (DE)
(74) Vertreter: FDST Patentanwälte

(56) Entgegenhaltungen:
- EP-A1- 3 418 864
- US-A1- 2016 309 246
- US-A1- 2017 374 477
- US-A1- 2019 064 344
- US-A1- 2019 101 636

## Beschreibung

Die Erfindung betrifft ein Hörgerät, insbesondere Hörhilfegerät. Die Erfindung betrifft ferner ein Verfahren zum Betreiben eines solchen Hörgeräts.

Personen, die unter einer Verminderung des Hörvermögens leiden, verwenden häufig ein Hörhilfegerät. Hierbei wird meist mittels eines elektromechanischen Schallwandlers ein Umgebungsschall erfasst. Die erfassten elektrischen Signale werden mittels einer Verstärkerschaltung bearbeitet und mittels eines weiteren elektromechanischen Wandlers in den Gehörgang der Person eingeleitet. Es sind unterschiedliche Arten von Hörhilfegeräten bekannt. Die sogenannten "Hinterdem-Ohr-Geräte" werden zwischen Schädel und Ohrmuschel getragen. Die Einleitung des verstärkten Schallsignals in den Gehörgang erfolgt hierbei mittels eines Schallschlauchs. Eine weitere gebräuchliche Ausgestaltung eines Hörhilfegeräts ist ein "im-Ohr-Gerät", bei dem das Hörhilfegerät selbst in den Gehörgang eingeführt wird. Mittels dieses Hörhilfegeräts wird folglich der Gehörgang zumindest teilweise verschlossen, sodass außer dem mittels des Hörhilfegeräts erzeugten Schallsignalen kein weiterer Schall - oder lediglich in stark vermindertem Maß Schall - in den Gehörgang eindringen kann.

Zur Bedienung des Hörgeräts weist beispielsweise das Hörhilfegerät selbst Bedienelemente, wie Taster, Drehregler oder dergleichen, auf. Mittels der Bedienelemente kann ein Benutzer eine Funktion des Hörhilfegeräts verändern. Beispielsweise ist es dem Benutzer ermöglicht, durch Tastendruck oder Drehen des Drehreglers, zwischen verschiedenen Betriebsmodi, wie beispielsweise einem Normalbetriebsmodus, einem Flugmodus oder dergleichen, oder verschiedenen Betriebsprogrammen zu wählen oder eine Lautstärke einzustellen.

Bei bestimmungsgemäßen Gebrauch des Hörhilfegeräts, wenn also der Benutzer das Hörhilfegerät an oder im Ohr trägt, sind die herkömmlichen Bedienelemente üblicherweise außerhalb des Sichtfelds des Benutzers. Die Bedienung des Hörhilfegeräts, beispielsweis das Drücken des Tasters, muss also "blind" erfolgen. Eine solche Bedienung ist wenig intuitiv. Ferner wird das berührungsbehaftete Bedienen eines am oder im Ohr getragenen Hörhilfegeräts vom Benutzer mitunter als unkomfortabel wahrgenommen. Ein weiterer Nachteil hierbei ist, dass die Bedienung durch weitere Personen wahrgenommen und als solche identifiziert werden kann. Daher ist eine diskrete Bedienung des Hörhilfegeräts nicht möglich.

Aus dem Stand der Technik ist es ferner bekannt, die Bedienung des Hörhilfegeräts mittels eines zusätzlichen, separaten Geräts, wie einer Fernbedienung oder einem mit einer entsprechenden Anwendungssoftware ausgestatteten Mobiltelefon, durchzuführen. Nachteiligerweise setzt in diesem Fall die Bedienung des Hörhilfegeräts das Mitführen des separaten Geräts voraus. Dies geht wiederum mit einer Einschränkung des Komforts für den Benutzer einher.

In US 2016/309246 A1 ist ein Wiedergabegerät dargestellt, das mehrere Sensoren zum Erfassen einer Bediengeste aufweist.

US 2019/0064344 A1 zeigt ein binaurales Hörgerät, das Radarsensoren zum Erfassen von biometrischen Daten umfasst.

Aus EP 3 418 864 A1 ist ein Verfahren zum Erfassen von Gesten mittels eines Tablett-Computer oder dergleichen offenbart.

US 2017/0374477 A1 zeigt ein Verfahren zur Kontrolle eines Hörgeräts

US 2019/0101636 A1 offenbart ein Radarsystem, das beispielsweise ein Bestandteil einer Armbanduhr ist.

Der Erfindung liegt die Aufgabe zugrunde, ein verbessertes Hörgerät sowie ein verbessertes Verfahren zum Betreiben eines solchen Hörgeräts anzugeben, wobei vorteilhafterweise ein Bedienkomfort erhöht ist.

Hinsichtlich des Hörgeräts wird diese Aufgabe durch die Merkmale des Anspruchs 1 und hinsichtlich des Verfahrens durch die Merkmale des Anspruchs 5 gelöst. Vorteilhafte Weiterbildungen und Ausgestaltungen sind Gegenstand der jeweiligen Unteransprüche.

Beispielsweise ist das Hörgerät ein Kopfhörer oder umfasst einen Kopfhörer. Besonders bevorzugt ist das Hörgerät jedoch ein Hörhilfegerät. Das Hörhilfegerät dient der Unterstützung einer unter einer Verminderung des Hörvermögens leidenden Person. Diese Unterstützung stellt insbesondere eine Grundfunktion des Hörhilfegeräts dar. Mit anderen Worten ist das Hörhilfegerät ein medizinisches Gerät, mittels dessen beispielsweise ein partieller Hörverlust ausgeglichen wird. Das Hörhilfegerät ist zum Beispiel ein "receiver-in-the-canal"-Hörhilfegerät (RIC; Ex-Hörer-Hörhilfegerät), ein Im-Ohr-Hörhilfegerät, wie ein "in-the-ear"-Hörhilfegerät, ein "in-the-canal"-Hörhilfegerät (ITC) oder ein "complete-in-canal"-Hörhilfegerät (CIC), eine Hörbrille, ein Taschenhörhilfegerät, ein Knochenleitungs-Hörhilfegerät oder ein Implantat. Besonders bevorzugt ist das Hörhilfegerät ein Hinter-dem-Ohr-Hörhilfegerät ("Behind-the-Ear"-Hörhilfegerät), das hinter einer Ohrmuschel getragen wird.

Das Hörgerät weist eine Radarsensoranordnung auf. Die Radarsensoranordnung ist hierbei geeignet, insbesondere vorgesehen und eingerichtet, eine Bediengeste zu erfassen und weist zumindest zwei Radarsensoren, also zwei oder mehr Radarsensoren, auf. Mittels jedem der Radarsensoren werden bei Betrieb (elektromagnetische) Wellen abgestrahlt und geeigneterweise an einem Objekt, beispielsweise einer Hand oder zumindest einem Finger des Benutzers, reflektiert und/oder gestreut. Die reflektierten/gestreuten Wellen werden mittels der Radarsensoren erfasst. Beispielsweise wird anhand der Laufzeit der Wellen der Abstand des Objekts zum jeweiligen Radarsensor bestimmt. Mit anderen Worten wird die Zeitspanne zwischen dem Aussenden und dem Empfangen der elektromagnetischen Wellen bestimmt und unter Berücksichtigung der Fortpflanzungsgeschwindigkeit der elektromagnetischen Wellen der Abstand bestimmt. Alternativ wird der Abstand beispielsweise anhand einer geänderten Wellenform bestimmt. Beispielsweise wird durch Bestimmen einer zeitlichen Änderung des Abstands auf eine Bewegung, und insbesondere auf eine Bewegungsrichtung, einer Hand und/oder eines oder mehrerer Finger des Benutzers geschlossen und als Bediengeste erfasst werden.

Da die Radarsensoranordnung zumindest zwei Radarsensoren umfasst, erfolgt das Erfassen der Bediengeste auf Grundlage von (mehreren) Radarsignalen unterschiedlicher Quellen, nämlich der zumindest zwei Radarsensoren, und somit mit vergleichsweise reduzierter Rechenleistung, niedrigerem Energieverbrauch und kostengünstiger Hardware. Insbesondere ist ferner eine Störanfälligkeit reduziert. Ferner ist eine vergleichsweise einfache Erfassung unterschiedlicher Bediengesten ermöglicht.

Die Radarsensoranordnung umfasst beispielsweise ein Radarsensorarray mit einer Anzahl an Radarsensoren, wobei die Anzahl der Radarsensoren größer oder gleich zwei, und insbesondere gleich drei oder neun ist. Die durch jeden der Radarsensoren erfassten Abstände, auch als Abstandswert bezeichnet, werden beispielsweise kombiniert ausgewertet, d.h. die Abstandwerte jedes Radarsensors werden zur Erfassung der Bediengeste herangezogen.

Die Radarsensoren werden geeigneterweise mit einer Frequenz betrieben, die beispielsweise zwischen 76 GHz und 81 GHz ist und vorzugsweise 77 GHz beträgt. Mit anderen Worten liegt die Frequenz der ausgesandten elektromagnetischen Wellen zwischen 76 GHz und 81 GHz. Somit ist ein energieeffizienter Betrieb ermöglicht. Beispielsweise weisen die mittels der Radarsensoren erstellten jeweiligen elektromagnetischen Wellen untereinander und/oder über die Zeit die gleiche Frequenz oder unterschiedliche Frequenzen auf. Zum Beispiel variiert die Frequenz mit der Zeit, und/oder jedem der Radarsensoren ist eine unterschiedliche Frequenz zugeordnet. Somit ist eine Auswertung vereinfacht. Alternativ ist beispielsweise die Frequenz konstant und/oder bei den unterschiedlichen Radarsensoren gleich. Somit ist eine Komplexität verringert, bzw. es können Gleichteile herangezogen werden.

Bei Betrieb der Radarsensoranordnung ist jedem der Radarsensoren durch die abgestrahlten Wellen ein räumlicher Überwachungsbereich, beispielsweise in Form einer Keule, zugeordnet. Die Überwachungsbereiche der Radarsensoren überlappen dabei zum Beispiel teilweise oder vollständig. Alternativ hierzu sind die Überwachungsbereich zueinander beabstandet. Durch die Summe der Überwachungsbereiche ist ein Raumbereich gebildet, der auf die Bediengeste hin überwacht wird. Bei bestimmungsgemäßen Gebrauch des Hörgeräts, wenn also ein Benutzer das Hörgerät beispielsweise am oder im Ohr trägt, ist der überwachte Raumbereich insbesondere neben dem Kopf des Benutzers gebildet und erstreckt sich beispielsweise, vom Kopf des Benutzers aus gesehen, bis zu einem Abstand von bis zu 40 cm, geeigneterweise bei zu 30 cm oder insbesondere bis zu 20 cm.

Die Bediengeste ist beispielsweise eine Hand- und/oder Fingergeste. In einer Ausgestaltung handelt es sich bei der Bediengeste um eine kreisende Bewegung einer Hand oder eines Fingers, ein Streichen des Daumens über den Zeigefinger oder eine Relativbewegung von Daumen und Zeigefinger aufeinander zu oder voneinander weg. Die Bediengeste ist insbesondere ein zwei- oder dreidimensionales Bewegungsmuster. Eine solche Bediengeste kann bei bestimmungsgemäßen Gebrauch des Hörgeräts intuitiv und einfach durch eine entsprechende Hand- und/oder Fingerbewegung im überwachten Raumbereich, also beispielsweise neben dem Kopf des Benutzers, ausgeführt werden. Mit zunehmender Anzahl an Radarsensoren nimmt beispielsweise das Volumen des überwachten Raumbereichs zu, wodurch ein Benutzerkomfort weiter erhöht ist. Ferner können mit zunehmender Anzahl an Radarsensoren komplexere und/oder eine höhere Anzahl unterschiedlicher Bediengesten erfasst werden.

In einer Ausgestaltung der Erfindung umfasst jeder Radarsensor zumindest eine Radarantenne, insbesondere eine Patchantenne. Beispielsweise weisen die Radarsensoren lediglich eine Radarantenne oder weitere Radarantennen auf. Die jeweilige Radarantenne dient insbesondere jeweils sowohl dem Senden als auch dem Empfangen von elektromagnetischen Wellen. Alternativ hierzu weist der jeweilige Radarsensor jeweils eine unterschiedliche Radarantenne für das Senden und das Empfangen auf.

Die Radarsensoranordnung umfasst eine Steuerungsanordnung. Die Steuerungsanordnung ist zum Betreiben der Radarsensoranordnung vorgesehen und eingerichtet. Mit anderen Worten ist die Steuerungsanordnung vorzugsweise dazu vorgesehen und eingerichtet, die Radarsensoranordnung, insbesondere die Radarantenne(n) der Radarsensoren, mit Signalen derart zu beaufschlagen, dass elektromagnetische Wellen erzeugt werden. Vorzugsweise dient die Steuerungsanordnung ferner dem Auslesen von mittels der Radarsensoranordnung erfassten Signalen sowie zu deren weiterer Verarbeitung und/oder Auswertung, insbesondere im Hinblick auf das Erfassen der Bediengeste. Mit anderen Worten ist mittels der Steuerungsanordnung vorzugsweise eine Auswerteanordnung gebildet. Die Steuerungsanordnung umfasst beispielsweise einen anwenderspezifischen Schaltkreis (ASIC) oder einen Mikroprozessor, der beispielsweise programmierbar ausgestaltet ist.

Die Steuerungsanordnung bildet beispielsweise eine gemeinsame Baueinheit mit einer Elektronikanordnung, welche beispielsweise die weiter oben beschriebene Grundfunktion des Hörgeräts bereitstellt, also beispielsweise das Erfassen eines Umgebungsschalls, dessen Bearbeitung sowie Weiterleitung in den Gehörgang des Benutzers. Die Steuerungsanordnung sowie die Elektronikanordnung sind dabei beispielsweise auf einem gemeinsamen Schaltungsträger, insbesondere einer Leiterplatte, angeordnet. Somit ist ein kompaktes und kostengünstiges Hörgerät bereitgestellt. Alternativ ist die Steuerungsanordnung getrennt von der Elektronikanordnung, beispielsweise auf einer Leiterplatte, gebildet.

In einer Ausgestaltung der Erfindung ist die Steuerungsanordnung dazu vorgesehen und eingerichtet, im Betrieb der Radarsensoranordnung beispielsweise jeden Radarsensor kontinuierlich, d.h. insbesondere im Wesentlichen ohne Unterbrechung oder dauerhaft zu betreiben. Alternativ oder in Kombination hierzu werden bei Betrieb die mittels jedes der Radarsensoren erfassten Radarsignale vorzugsweise zeitgleich weiterverarbeitet/ausgewertet, insbesondere im Hinblick auf das Erfassen der Bediengeste.

Die Steuerungsanordnung umfasst erfindungsgemäß einen Multiplexer zum Auswählen eines der Radarsensoren. Der Multiplexer ist geeignet, insbesondere vorgesehen und eingerichtet, einen der Radarsensoren auszuwählen, insbesondere zur Verarbeitung und Auswertung der mittels des jeweiligen Radarsensors erfassten Radarsignale. Mit anderen Worten kann mittels des Multiplexers ein Radarsensor ausgewählt werden und die mit ausgewähltem Radarsensor erfassten Radarsignale werden sodann einer Verarbeitung und Auswertung im Hinblick auf die Erfassung der Bediengeste unterzogen.

Die mittels der Radarsensoren erfassten Radarsignale liegen dabei insbesondere als Eingangssignale an jeweils einem zugeordneten Eingang des Multiplexers an.

Jeweils eines der Radarsignale wird durch den Multiplexer ausgewählt, d.h. zu einem Ausgang des Multiplexers durchgeschaltet. Da die Bediengeste, also insbesondere die Bewegung der Hand und/oder Finger des Benutzers im überwachten Raumbereich, im Vergleich zur Schaltfrequenz des Multiplexers langsam durchgeführt wird, kann eine sichere Erfassung der Bediengeste erfolgen. Das Vorsehen des Multiplexers ermöglicht somit eine besonders einfache Verarbeitung und Auswertung, da vorzugsweise zu einem Zeitpunkt jeweils nur die Radarsignale eines (einzigen) der Radarsensoren zu verarbeiten und auszuwerten sind. Daher sind eine erforderliche Rechenleistung und ein Energiebedarf reduziert. Somit ist ein energieeffizienter und energiesparender Betrieb des Hörgeräts ermöglicht. Das Auswählen zwischen den Radarsensoren kann dabei zeitlich alternierend, insbesondere sequentiell oder (pseudo-)zufällig erfolgen. Zum Beispiel das Umschalten periodisch. Mit anderen Worten wird der multiplexer periodisch betätigt. Die Periode ist hierbei zweckmäßigerweise kleiner als 1 Sekunde und beispielsweise zwischen 0,001 Sekunden und 0,1 Sekunden.

Alternativ oder zusätzlich ist der Multiplexer vorgesehen und eingerichtet, einen der Radarsensoren auszuwählen, welcher zum Erzeugen von elektromagnetischen Wellen mit einem Signal beaufschlagt wird. Das Auswählen zwischen den Radarsensoren erfolgt dabei beispielsweise zeitlich alternierend, insbesondere sequentiell oder (pseudo-)zufällig. Somit wird zu jedem Zeitpunkt vorzugsweise lediglich ein einziger Radarsensor betrieben, was wiederum zum energiesparenden Betrieb beiträgt.

Dem Multiplexer ist erfindungsgemäß ein Verstärker nachgeschaltet. Der Verstärker ist vorgesehen und eingerichtet, das vom jeweiligen Radarsensor über den Multiplexer durchgeschaltete Radarsignal zu verstärken. Da durch den Multiplexer zu einem Zeitpunkt lediglich das Radarsignal eines einzigen Radarsensors durchgeschaltet ist, ist insbesondere lediglich ein einziger Verstärker erforderlich. Somit ist vorzugsweise lediglich ein einziger Verstärker vorhanden. Somit sind ein erforderlicher Bauraum und ein Energiebedarf verringert. Zudem sind Herstellungskosten reduziert.

Dem Verstärker ist erfindungsgemäß ein Analog-Digital-Wandler nachgeschaltet. Der Analog-Digital-Wandler ist dazu vorgesehen und eingerichtet, ein analoges Ausgangssignal des Multiplexers, nämlich eines der analogen Radarsignale, in ein digitales Ausgangssignal (Wort), nämlich ein korrespondierendes digitales Radarsignal, umzusetzen. Das Ausgangssignal wird bei Betrieb zweckmäßigerweise im Hinblick auf die Erfassung der Bediengeste ausgewertet.

Der Analog-Digital-Wandler umfasst erfindungsgemäß einen Demultiplexer, welcher vorzugsweise dazu vorgesehen und eingerichtet ist, ein an seinem Eingang anliegendes Signal auf einen von mehreren Ausgängen durchzuschalten.

In einer bevorzugten Ausgestaltung der Erfindung ist ein Taktgeber vorgesehen, mittels dessen der Multiplexer und der Demultiplexer beaufschlagt sind. Der Taktgeber ist beispielsweise ein Oszillator. Der Taktgeber ist vorzugsweise dazu vorgesehen und eingerichtet, den Multiplexer und den Demultiplexer im selben Takt zu betreiben und mit demselben Taktsignal zu beaufschlagen. Beispielsweise ist der Demultiplexer dazu vorgesehen und eingerichtet, ein von einem der Radarsensoren erfasstes, über den Multiplexer, den etwaigen Verstärker und den Analog-Digital-Wandler geleitetes Radarsignal von seinem Eingang auf einen einzigen gemeinsamen Ausgange durchzuschalten, wobei vorzugsweise das nunmehr digitale Radarsignal mittels einer Kennung versehen wird. Die Kennung korrespondiert hierbei insbesondere zu dem aktuellen Eingang des Multiplexers. Die Kennung erlaubt somit eine eindeutige Zuordnung des am Ausgang des Demultiplexers anliegenden Radarsignals zum jeweiligen Radarsensor, mit welchem das Radarsignal ursprünglich erfasst worden ist. Zusammengefasst ermöglicht der Taktgeber insbesondere einen synchronen Betrieb des Multiplexers und des Demultiplexers sowie eine einfache und energieeffiziente Auswertung der mittels der Radarsensoren erfassten Radarsignale.

Vorzugsweise umfasst das Hörgerät ein Gehäuse. Das Gehäuse ist beispielsweise aus Kunststoff gefertigt und grenzt mittels einer Anzahl an Gehäusewandungen einen im Inneren des Gehäuses gebildeten Innenraum von einer äußeren Umgebung ab. Das Gehäuse umfasst dazu beispielsweise ein erstes, wannenartig ausgebildetes Teil sowie einen das erste Teil verschließenden Deckel. Im Innenraum sind beispielsweise die etwaige, die Grundfunktion des Hörgeräts bereitstellende Elektronikanordnung sowie die Steuerungsanordnung der Radarsensoranordnung aufgenommen. Das Gehäuse weist eine Sichtseite auf. Insbesondere umfasst der Deckel die Sichtseite. Die Sichtseite weist vom Innenraum des Gehäuses weg und ist von der äußeren Umgebung aus zumindest abschnittsweise mit bloßem Auge zu sehen. Vorzugsweise ist die Sichtseite durch eine Gehäusewandung des Gehäuses gebildet, welche bei bestimmungsgemäßen Gebrauch des Hörgeräts, wenn also der Benutzer das Hörgerät am oder im Ohr trägt, vom Kopf des Benutzers weg weist. Die Sichtseite ist also beispielsweise dem mittels der Radarsensoranordnung auf eine Bediengeste hin überwachten Raumbereich zugewandt.

Die Radarsensoren sind beispielsweise in die der Sichtseite zugeordnete Gehäusewandung integriert und beispielsweise in jeweils einer entsprechenden Aussparung der Gehäusewandung aufgenommen. Somit können die elektromagnetischen Wellen der Radarsensoren unmittelbar in den überwachten Raumbereich abgestrahlt werden, ohne zunächst eine Gehäusewandung durchdringen zu müssen. Vorzugsweise schließen die Radarsensoren flächenbündig mit der Sichtseite ab, wodurch sichtseitig eine glatte und haptisch angenehme Oberfläche gebildet ist. Auch ist eine Ansammlung von Fremdpartikeln unterbunden. Alternativ sind die Radarsensoren beispielsweise im Innenraum des Gehäuses unterhalb der Sichtseite angeordnet, wobei die Radarsensoren im Betrieb dann die elektromagnetischen Wellen durch die der Sichtseite zugeordnete Gehäusewandung, insbesondere den Deckel, in den überwachten Raumbereich abstrahlen. Somit ist ein optisches Erscheinungsbild des Hörgeräts nicht verändert.

Um zumindest dem, insbesondere im Umgang mit der Radarsensoranordnung, ungeübten Benutzer eine Hilfestellung über die Position der Radarsensoren und damit den überwachten Raumbereich zu geben, sind die Radarsensoren auf der Sichtseite optisch hervorgehoben, beispielsweise durch eine farbliche Markierung. Insbesondere ist eine die Konturen der Radarsensoren darstellende Markierung auf der Sichtseite vorhanden.

Das Verfahren dient dem Betreiben eines Hörgeräts mit einer zumindest zwei Radarsensoren aufweisenden Radarsensoranordnung zum Erfassen einer Bediengeste. Das Verfahren sieht vor, dass mittels der Radarsensoren eine Bediengeste erfasst und daraufhin eine Funktion des Hörgeräts verändert wird. Somit ist ein Bedienkomfort vergrößert.

Bei der Funktion des Hörgeräts kann es sich um jedwede Hörgerätfunktion handeln. Zum Beispiel ist die Funktion das Einstellen einer Lautstärke, das Auswählen eines Betriebsmodus oder Betriebsprogramms sowie das Ausschalten des Hörgeräts ("Power-Off"). Vorzugsweise umfasst die Funktion zumindest eine der vorgenannten Ausgestaltung.

Das Erfassen der Bediengeste erfolgt beispielsweise mittels der etwaigen Steuerungsanordnung, mittels der die durch die Radarsensoren erfassten Radarsignale (Radarsensorsignal), insbesondere deren zeitliche Verläufe, ausgewertet werden. Dazu umfasst die Steuerungsanordnung insbesondere einen Mikrocontroller mit einem darauf implementierten Steuerprogramm, welches insbesondere einen Auswertealgorithmus umfasst. Beispielsweise sind in einem Speicher eine oder mehrere Bediengesten repräsentierende Signalverläufe hinterlegt, wobei diese Signalverläufe mit durch die Radarsensoren erfassten Radarsignalverläufen verglichen werden. Sofern die erfassten Radarsignalverläufe innerhalb einer zulässigen Toleranzabweichung mit den oder zumindest einem der hinterlegten Signalverläufe übereinstimmen, gilt die Bediengeste zweckmäßigerweise als erfasst. Zur Auswertung können z.B. statistische Methoden und/oder eine künstliche Intelligenz herangezogen werden.

In einer Ausgestaltung des Verfahrens sind unterschiedlichen Bediengesten unterschiedliche Funktionen des Hörgeräts zugeordnet. Beispielsweise erfolgt mit einer ersten Bediengeste das Verändern einer ersten Funktion des Hörgeräts, während mit einer zweiten Bediengeste das Verändern einer zweiten Funktion des Hörgeräts erfolgt. Die erste Bediengeste ist beispielsweise eine Handbewegung, und die zweite Bediengeste ist beispielsweise eine Relativbewegung zweier Finger oder eines Fingers und des Daumens zueinander.

In einer bevorzugten Ausgestaltung des Verfahrens wechselt die Radarsensoranordnung auf ein Triggersignal hin von einem Ruhemodus, in welchem die Radarsensoren nicht zum Erfassen der Bediengeste betrieben werden, in einen Aktivmodus, in welchem die Radarsensoren zum Erfassen der Bediengeste betrieben werden. Beispielsweise ist im Ruhemodus ein Energieverbrauch der Radarsensoranordnung nahe oder gleich null, zumindest aber im Vergleich zum Aktivmodus stark reduziert. Somit ist ein energiesparender Betrieb des Hörgeräts ermöglicht. Beispielsweise wechselt die Radarsensoranordnung in den Aktivmodus, wenn eine hinreichende Wahrscheinlichkeit vorliegt, dass der Benutzer eine Funktion des Hörgeräts mittels der Bediengeste verändern will. Das Triggersignal kann beispielsweise das Einschalten des Hörgeräts (also ein Wechsel von "Power-Off" nach "Power-On" sein) sein. Vorzugsweise wird die Radarsensoranordnung nach dem Einschalten des Hörgeräts für eine vorbestimmte Zeitspanne, beispielsweise 5 Minuten, 10 Minuten oder 20 Minuten, im Aktivmodus betrieben. Nach Ablauf der vorbestimmten Zeitspanne wechselt die Radarsensoranordnung in den Ruhemodus. Aus dem Ruhemodus heraus wechselt die Radarsensoranordnung auf das Triggersignal hin, beispielweise wenn eine vorbestimmte Hörsituation oder eine vorbestimmte Veränderung der Hörsituation, insbesondere einer Umgebungslautstärke, erkannt ist, in den Aktivmodus und verbleibt dort zweckmäßigerweise wiederum für die vorbestimmte Zeitspanne.

Die im Zusammenhang mit Hörgerät erläuterten Weiterbildungen und Vorteile sind sinngemäß auch auf das Verfahren zum Betrieb eines Hörgeräts zu übertragen und umgekehrt

Nachfolgend werden Ausführungsbeispiele der Erfindung anhand einer Zeichnung näher erläutert. Darin zeigen:
- Fig. 1: schematisch ein erfindungsgemäßes Hörgerät,
- Fig. 2: schematisch eine Sichtseite des Hörgeräts mit einem ein Radarsensorarray aufweisenden Radarsensoranordnung,
- Fig. 3: schematisch ein erstes Ausführungsbeispiel des Radarsensorarrays,
- Fig. 4: schematisch ein zweites Ausführungsbeispiel des Radarsensorarrays,
- Fig. 5: schematisch ein drittes Ausführungsbeispiel des Radarsensorarrays,
- Fig. 6: eine schematische schaltungstechnische Darstellung der Radarsensoranordnung,
- Fig. 7: ein Verfahren zum Betreiben des Hörgeräts, und
- Fig. 8: einen zeitlichen Verlauf von Radarsignalen.

Einander entsprechende Teile sind in allen Figuren mit den gleichen Bezugszeichen versehen.

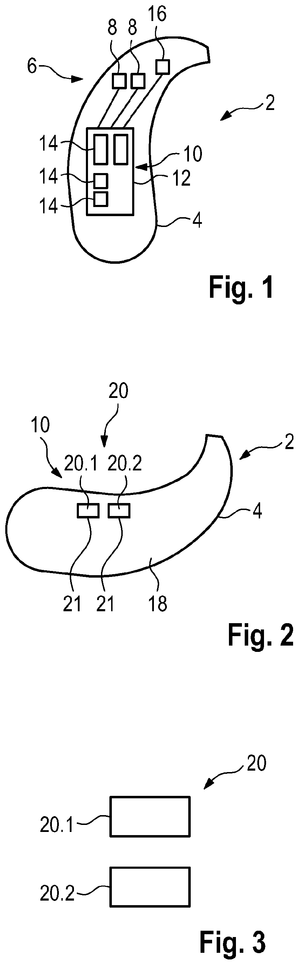

In Fig. 1 ist eine schematische Ansicht eines Hörgeräts in Form eines Hörhilfegeräts 2 dargestellt, das vorgesehen und eingerichtet ist, hinter einem Ohr eines Benutzers getragen zu werden. Das Hörhilfegerät 2 weist einen nicht dargestellten Schallschlauch auf, der bei bestimmungsgemäßen Gebrauch des Hörhilfegeräts 2 in das Ohr des Benutzers eingeführt wird. Das Hörhilfegerät 2 umfasst ein Gehäuse 4, das aus einem Kunststoff gefertigt ist. Innerhalb eines durch das Gehäuse 4 gebildeten Innenraums ist ein Mikrofon 6 angeordnet, welches beispielsweise zwei elektromechanische Schallwandler 8 aufweist. Mittels der beiden elektromechanischen Schallwandler 8 ist es ermöglicht, eine Richtcharakteristik des Mikrofons 6 zu verändern, indem ein zeitlicher Versatz zwischen den mittels des jeweiligen elektromechanischen Schallwandlers 8 erfassten akustischen Signalen verändert wird. Das Mikrofon 6 ist somit eine Anordnung von elektromechanischen Schallwandlern 8. Alternativ wird beispielsweise eine Mikrofonanordnung mit mehreren Mikrofonen verwendet. Die beiden elektromechanischen Schallwandler 8 / Mikrofone sind mit einer der Signalverarbeitung dienenden Elektronikanordnung 10 signaltechnisch gekoppelt, die z.B. eine Verstärkerschaltung umfasst.

Die Elektronikanordnung 10 ist mittels auf einer ersten Seite einer Leiterplatte 12 angeordneten Schaltungselementen 14 zumindest teilweise gebildet, wie zum Beispiel elektrischen und/oder elektronischen Bauteilen. Ferner ist mit der Elektronikanordnung 10 ein Lautsprecher 16 signaltechnisch gekoppelt, mittels dessen die mit dem Mikrofon 6 aufgenommenen und/oder mittels der Elektronikanordnung 10 bearbeiteten Audiosignale als Schallsignale ausgegeben werden. Diese Schallsignale werden mittels des nicht näher dargestellten Schallschlauchs in das Ohr des Benutzers des Hörhilfegeräts 2 geleitet.

Bei bestimmungsgemäßen Gebrauch des Hörhilfegeräts 2, wenn also der Benutzer das Hörhilfegerät 2 hinter dem Ohr trägt, ist eine erste Seite des Gehäuses 4 dem Kopf des Benutzers zugewandt und eine, der ersten Seite gegenüberliegende, zweite Seite ist dem Kopf abgewandt und somit, zumindest abschnittsweise, mit bloßen Auge sichtbar. Diese zweite Seite ist in Fig. 2 gezeigt und ist nachfolgend als Sichtseite 18 bezeichnet.

Das Hörhilfegerät 2 umfasst ferner eine Radarsensoranordnung 20. Die Radarsensoranordnung 20 ist geeignet, eine Bediengeste B (Fig. 3) zu erfassen und umfasst ein zwei Radarsensoren 20.1 und 20.2 aufweisendes Radarsensorarray. Die Radarsensoren 20.1, 20.2 sind in die Sichtseite 18 des Gehäuses 4 integriert. Optisch sind die Radarsensoren 20.1, 20.2 von der Sichtseite im Übrigen farblich abgesetzt. Somit ist dem Benutzer ein Hinweis auf das Vorhandensein und die Position der Radarsensoren 20.1, 20.2 bereitgestellt. Im durch das Gehäuse 4 gebildeten Innenraum sind die Radarsensoren 20.1, 20.2 auf der Leiterplatte 12 angeordnet und zwar auf einer der ersten Seite der Leiterplatte 12 gegenüberliegenden, zweiten Seite der Leiterplatte 12.

Jeder Radarsensor 20.1, 20.2 umfasst eine als Patchantenne ausgebildete Radarantenne 21. Die Patchantenne ist dabei flächig auf der Leiterplatte 12 ausgebildet, und weist eine Ausdehnung in einer Fläche auf, die parallel zur Hauptausdehnungsrichtung der Leiterplatte 12 ist. Insbesondere sind die Patchantennen zumindest teilweise mittels Leiterbahnen auf der Leiterplatte 12 gebildet. Wie weiter aus Fig. 2 ersichtlich ist, sind die Radarsensoren 20.1, 20.2 in einem Randbereich der Sichtfläche 18 angeordnet. Der Randbereich ist dabei bei bestimmungsgemäßem Gebrauch des Hörhilfegeräts 2 weder vom Kopf noch vom Ohr des Benutzers überdeckt. Mit anderen Worten liegen die Radarsensoren 20.1, 20.2b also in einer vom Kopf weggewandten Richtung frei.

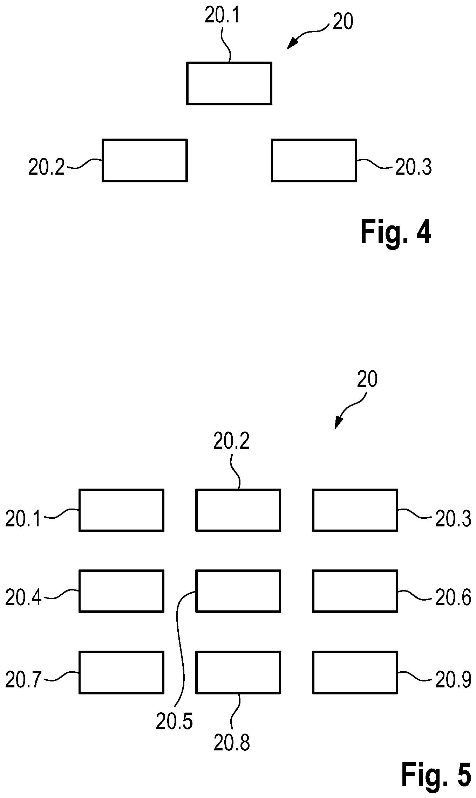

In Fig. 4 ist eine weitere Variante des Radarsensorarray gezeigt. Das Radarsensorarray umfasst lediglich die zwei Radarsensoren 20.1, 20.2. Die Radarsensoren 20.1, 20.2 weisen eine im Wesentlichen rechteckige Form auf. In Richtung ihrer Längserstreckung sind die Radarsensoren 20.1, 20.2 voneinander beabstandet und parallel zueinander angeordnet. In einer Richtung quer zur Längserstreckung sind die Radarsensoren 20.1, 20.2 miteinander fluchtend angeordnet.

Fig. 5 zeigt eine weitere Variante des Radarsensorarray, das drei im Wesentlichen rechteckigen Radarsensoren 20.1, 20.2, 20.3 aufweist. Die Radarsensoren 20.1, 20.2, 20.3 sind, wie auch bei den vorhergehenden Ausführungsbeispielen, zueinander baugleich, und zu einem gleichschenkligen Dreieck angeordnet.

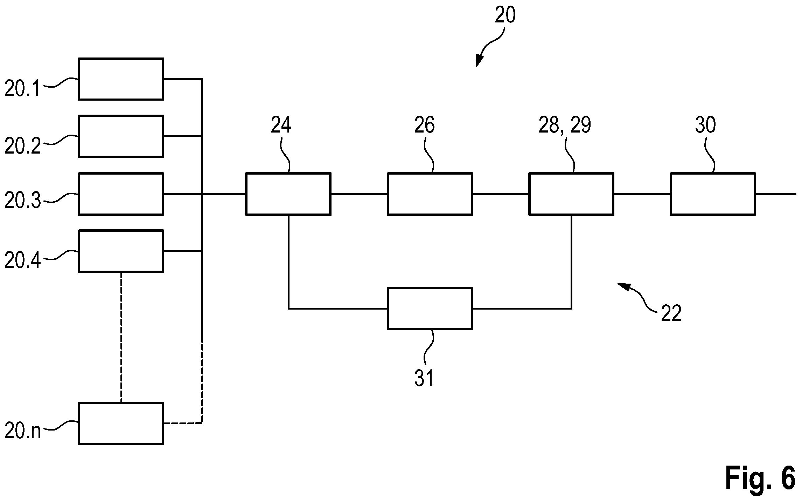

In Figur 6 ist eine weitere Alternative des Radarsensorarrays gezeigt. Das Radarsensorarray weist neun im Wesentlichen rechteckig und zueinander baugleiche Radarsensoren 20.1 bis 20.9 auf. Die Radarsensoren 20.1 bis 20.9 sind zu in einer Matrix mit drei Spalten und drei Zeilen angeordnet.

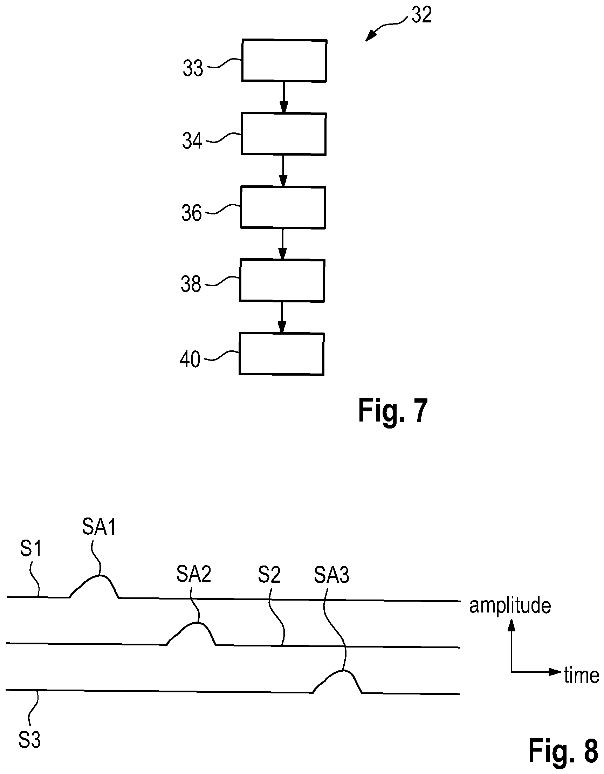

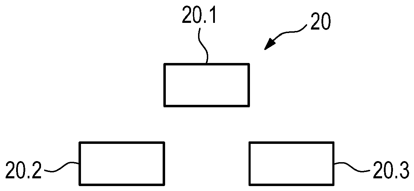

In Fig. 7 ist eine schematische schaltungstechnische Darstellung einer erfindungsgemäßen Radarsensoranordnung 20 dargestellt. Die Radarsensoranordnung 20 weist die Radarsensoren 20.1 bis 20.n sowie eine Steuerungsanordnung 22 auf. Jeder der Radarsensoren 20.1 bis 20.n ist mit einem jeweils zugeordneten Eingang eines Multiplexers 24 verbunden. Der Übersichtlichkeit halber ist lediglich ein Eingang des Multiplexers 24 in der Fig. 4 gezeigt. Ausgangsseitig ist dem Multiplexer 24 ein Verstärker 26 nachgeschaltet. Mit anderen Worten ist der Ausgang des Multiplexers 24 mit dem Eingang des Verstärkers 26 signaltechnisch verbunden. Der Verstärker 26 ist ein analoger Verstärker.

Ausgangsseitig ist dem Verstärker 26 ein Analog-Digital-Wandler 28 nachgeschaltet, d.h. ein Ausgang des Verstärkers 26 ist signaltechnisch mit dem Eingang des Analog-Digital-Wandlers 28 verbunden. Der Analog-Digital-Wandler 28 umfasst einen Demultiplexer 29. Dem Analog-Digital-Wandler 28 ist ein Auswerteanordnung 30 nachgeschaltet. Mit anderen Worten ist ein Signalausgang des Analog-Digital-Wandlers 28 signaltechnisch mit einem Eingang der Auswerteanordnung 30 verbunden. Die Auswerteanordnung 30 dient der Auswertung der erfassten Signale im Hinblick auf die Erfassung der Bediengeste B. Die Steuerungsanordnung 22 umfasst ferner einen Taktgeber 31, der signaltechnisch mit dem Multiplexer 24 und dem den Demultiplexer 29 umfassenden Analog-Digital-Wandler 28 verbunden ist. Hierbei wird der Multiplexer 24 und der Demultiplexer 29 synchron mittels des Taktgebers 31 angesteuert.

In Fig. 5 ist ein Verfahren 32 zum Betreiben des Hörhilfegeräts 2 gezeigt. In einem ersten Arbeitsschritt 33 befindet sich das Hörhilfegerät 2 in einem ausgeschalteten Zustand ("Power-Off"), in dem mittels des Mikrofons 6 keine Umgebungssignale erfasst, verarbeitet und über den Lautsprecher 16 ausgegeben werden. Mit anderen Worten befindet sich das Hörhilfegerät 2 im ausgeschalteten Zustand nicht im bestimmungsgemäßen Gebrauch und wird beispielsweise vom Benutzer nicht hinter dem Ohr getragen. Die Radarsensoranordnung 20 befindet sich dabei in einem Ruhemodus, in dem die Radarsensoren 20.1 bis 20.n nicht zum Erfassen der Bediengeste B betrieben werden. Es erfolgt somit im Ruhemodus keine Erfassung der Bediengeste B.

In einem zweiten Arbeitsschritt 34 wird anhand einer Nutzereingabe das Hörhilfegerät 2, vom ausgeschalteten Zustand in einen eingeschalteten Zustand ("Power-On" überführt. Mit anderen Worten schaltet der Benutzer das Hörhilfegerät 2 ein, beispielsweise durch Drücken eines Tasters am Hörhilfegerät 2. Somit steht das Hörhilfegerät 2 grundsätzlich zum bestimmungsgemäßen Gebrauch zur Verfügung. Beim Wechsel vom ausgeschalteten in den eingeschalteten Zustand wird ein Triggersignal generiert. Gleichzeitig wird ein Timer mit einer Zeitspanne von 10 Minuten gestartet. Auf das Triggersignal hin wechselt die Radarsensoranordnung 20 vom Ruhemodus in einen Aktivmodus, in dem die Radarsensoren 20.1 bis 20.n zum Erfassen der Bediengeste B betrieben werden. Dabei werden von jedem der Radarsensoren 20.1 bis 20.n elektromagnetische Wellen abgestrahlt.

Mittels des Multiplexer 24 wird bei jedem Taktsignal des Taktgebers 31 einer der Radarsensoren 20 ausgewählt. Das Radarsignal des ausgewählten Radarsensors 20 wird zu dem Verstärker 26 geleitet und somit mittels dessen verstärkt. Das verstärkte Radarsignal wird nachfolgend dem A/D-Wandler 28 sowie dem Demultiplexer 29 zugeleitet und somit in ein digitales Wort umgesetzt, das die Kennung des ausgewählten Radarsensors 20 aufweist.

Dieses digitale Wort, also das digitale Radarsignal, wird mittels der Auswerteanordnung 30 auf die Bediengeste B oder zumindest eines Teils hiervon in einem dritten Arbeitsschritt 36 überwacht. Bei dem nachfolgenden Taktsignal des Taktgebers 31 wird mittels des Multiplexers 24 der nachfolgende der Radarsensor 20 ausgewählt. Auch wird der Demultiplexer 29 entsprechend weiter gestellt, sodass bei der Umsetzung in das digitale Wort die Kennung des neu ausgewählten Radarsensors 20 herangezogen wird. Somit wird durch jeden der Radarsensoren 20.1 bis 20.n ein Überwachungsbereich, beispielsweise in Form einer Keule, gebildet. Insgesamt wird durch die Radarsensoranordnung 20 somit ein Raumbereich auf die Bediengeste B hin überwacht. Bringt der Benutzer das Hörhilfegerät 2 hinter seinem Ohr an, liegt der überwachte Raumbereich neben dem Kopf und insbesondere neben dem Ohr des Benutzers. Der überwachte Raumbereich erstreckt sich dabei in einem Abstand von etwa bis zu 30 cm neben dem Kopf des Benutzers.

In Fig. 6 ist der zeitliche Verlauf eines ersten Radarsignals S1, eines zweiten Radarsignals S2 und eines dritten Radarsignals S3 gezeigt, die mittels der Auswerteanordnung 30 überprüft werden, wobei die in Fig. 4 gezeigte Radarsensoranordnung 20 verwendet wird. Das erste Radarsignal S1 ist hierbei exemplarisch dem ersten Radarsensor 20.1, das zweiter Radarsignal S2 dem zweiten Radarsensor 20.2 und das dritter Radarsignal S3 dem dritten Radarsensor 20.3 zugeordnet. Die Bediengeste B ist in diesem Ausführungsbeispiel durch eine kreisende Bewegung eines Fingers des Benutzers ausgehend vom ersten Radarsensor 20.1 über den zweiten Radarsensor 20.2 hin zum dritten Radarsensor 20.3 definiert. Dabei durchstreift der Finger des Benutzers nacheinander die den Radarsensoren 20.1 bis 20.3 zugeordneten Überwachungsbereiche, win in Fig. 4 mittels der Pfeile angedeutet. Dabei werden die von den Radarsensoren 20.1 bis 20.3 abgegebenen elektromagnetischen Wellen am Finger reflektiert und zu den Radarsensoren 20.1 bis 20.3 zurückgeworfen und dort erfasst. Aufgrund der Bewegung des Fingers ergibt sich in jedem Radarsignal S1, S2, S3 eine dafür charakteristische Signalantwort SA1, SA2, SA3, nämlich dann, wenn sicher der Finger durch den zugeordneten Überwachungsbereich bewegt.

Jede Signalantwort SA1, SA2, SA3 umfasst dabei einen mit dem Annähern des Fingers an den jeweiligen Überwachungsbereich einhergehenden Anstieg sowie einen mit dem anschließenden Entfernen des Fingers aus dem jeweiligen Überwachungsbereich einhergehenden Abfall des jeweiligen Radarsignals S1, S2, S3. Die Signalantworten SA1, SA2, SA3 treten entsprechend der Bewegung des Fingers durch die Überwachungsbereiche mit einem zeitlichen Versatz zueinander auf. Mittels der Auswerteanordnung 30 erfolgt eine Überprüfung, ob die Signalantworten SA1, SA2, SA3 zumindest ein vorbestimmtes Kriterium erfüllen. Beispielsweise werden die erfassten Radarsignale S1, S2, S3 bzw. die Signalantworten SA1, SA2, SA3 mit einem oder mehreren in einem Speicher der Auswerteanordnung 30 hinterlegten Signalverläufen verglichen. Sofern die erfassten Radarsignale S1, S2, S3 bzw. die Signalantworten SA1, SA2, SA3 innerhalb einer zulässigen Toleranzabweichung mit den hinterlegten Signalverläufen übereinstimmen, gilt das Kriterium als erfüllt. Insbesondere wird alternativ oder in Kombination die Amplitude, die Steigung, der zeitliche Versatz der Signalantworten SA1, SA2, SA3 zueinander und/oder deren jeweiliger Wert bezüglich eines jeweiligen zugeordneten Grenzwerts überprüft.

Im vorliegenden Beispiel wird mittels der Auswerteanordnung 30 der zeitliche Versatz überprüft und mit einer Vorgabe verglichen. Hierbei erfüllt der zeitliche Ablauf und der zeitliche Versatz der Signalantworten SA1, SA2, SA3 das vorbestimmte Kriterium und die Bediengeste B gilt als erfasst.

Daraufhin wird in einem sich anschließenden vierten Arbeitsschritt 38 eine Funktion des Hörhilfegeräts 2 verändert, und beispielsweise die Lautstärke des Hörhilfegeräts 2, also dessen Verstärkungsfaktor, erhöht.

Wenn die in dem zweiten Arbeitsschritt 34 gestartete Zeitspanne des Timers abgelaufen ist, wird ein fünfter Arbeitsschritt 40 durchgeführt, und die Radarsensoranordnung 20 wird erneut in den Ruhemodus versetzt. Somit ist ein Erfassen der Bediengeste B mittels der Radarsensoranordnung 20 nicht mehr möglich. Folglich ist ein Energiebedarf verringert. Sofern ein bestimmtes externes Ereignis eintritt, beispielsweise eine Änderung der akustischen Umgebung, wird erneut die Radarsensoranordnung 20 betrieben und mittels der Auswerteanordnung 30 die jeweiligen Radarsignale ausgewertet und auf die Anwesenheit der Bediengeste B überwacht. Auch hier wird wieder wiederum die Radarsensoranordnung 20 lediglich für die bestimmte Zeitspanne betrieben.

### Bezugszeichenliste

- 2: Hörhilfegerät
- 4: Gehäuse
- 6: Mikrofon
- 8: Schallwandler
- 10: Elektronikanordnung
- 12: Leiterplatte
- 14: Schaltungselement
- 16: Lautsprecher
- 18: Sichtseite
- 20: Radarsensoranordnung
- 20.1 bis 20n: Radarsensor
- 21: Radarantenne
- 22: Steuerungsanordnung
- 24: Multiplexer
- 26: Verstärker
- 28: Analog-Digital-Wandler
- 29: Demultiplexer
- 30: Auswerteanordnung
- 31: Taktgeber
- 32: Verfahren zum Betreiben eines Hörgeräts
- 33: erster Arbeitsschritt
- 34: zweiter Arbeitsschritt
- 36: dritter Arbeitsschritt
- 38: vierter Arbeitsschritt
- 40: fünfter Arbeitsschritt

- B: Bediengeste
- S1: erstes Radarsignal
- S2: zweites Radarsignal
- S3: drittes Radarsignal
- SA1: erste Signalantwort
- SA2: zweite Signalantwort
- SA3: dritte Signalantwort

## Patentansprüche

1. Hörgerät (2), insbesondere Hörhilfegerät, mit einer zumindest zwei Radarsensoren (20.1 bis 20.n) aufweisenden Radarsensoranordnung (20) zum Erfassen einer Bediengeste (B), wobei die Radarsensoranordnung (20) eine Steuerungsanordnung (22) umfasst, welche einen Multiplexer (24) zum Auswählen eines der Radarsensoren (20.1 bis 20.n) aufweist, wobei dem Multiplexer (24) ein Verstärker (26) nachgeschaltet ist, wobei dem Verstärker (26) ein Analog-Digital-Wandler (28) nachgeschaltet ist, und wobei der Analog-Digital-Wandler (28) einen Demultiplexer (29) umfasst.

2. Hörgerät (2) nach Anspruch 1, wobei jeder Radarsensor (20.1 bis 20.n) zumindest eine Radarantenne (21), insbesondere eine Patchantenne, umfasst.

3. Hörgerät (2) nach Anspruch 1 oder 2, wobei ein Taktgeber (31) vorgesehen ist, mittels dessen der Multiplexer (24) und der Demultiplexer (29) beaufschlagt sind.

4. Hörgerät (2) nach einem der vorhergehenden Ansprüche mit einem eine Sichtseite (18) aufweisenden Gehäuse (4), wobei die Radarsensoren (20.1 bis 20.n), insbesondere flächenbündig mit der Sichtseite (18), in einer Gehäusewandung angeordnet sind und/oder wobei die Radarsensoren (20.1 bis 20.n) auf der Sichtseite (18) optisch erkennbar sind.

5. Verfahren (32) zum Betreiben eines Hörgeräts (2) nach einem der Ansprüche 1 bis 4, wobei mittels der Radarsensoren (20.1 bis 20.n) eine Bediengeste (B) erfasst und daraufhin eine Funktion des Hörgeräts (2) verändert wird.

6. Verfahren (32) nach Anspruch 5, wobei die Radarsensoranordnung (20) auf ein Triggersignal hin von einem Ruhemodus (32), in welchem die Radarsensoren (20.1 bis 20.n) nicht zum Erfassen der Bediengeste (B) betrieben werden, in einen Aktivmodus (34), in welchem die Radarsensoren (20.1 bis 20.n) zum Erfassen der Bediengeste (B) betrieben werden, wechselt.

## Claims

1. Hearing device (2), in particular hearing aid device, with a radar sensor arrangement (20) having at least two radar sensors (20.1 to 20.n) for capturing an operating gesture (B), wherein the radar sensor arrangement (20) comprises a control arrangement (22) which has a multiplexer (24) for selecting one of the radar sensors (20. 1 to 20.n), wherein an amplifier (26) is connected downstream of the multiplexer (24), wherein an analog-to-digital converter (28) is connected downstream of the amplifier (26), and wherein the analog-to-digital converter (28) comprises a demultiplexer (29).

2. Hearing device (2) according to claim 1, wherein each radar sensor (20.1 to 20.n) comprises at least one radar antenna (21), in particular a patch antenna.

3. Hearing device (2) according to claim 1 or 2, wherein a clock generator (31) is provided, by means of which the multiplexer (24) and the demultiplexer (29) are acted upon.

4. Hearing device (2) according to one of the preceding claims with a housing (4) having a visible side (18), wherein the radar sensors (20.1 to 20.n) are arranged, in particular flush-mounted with the visible side (18), in a housing wall and/or wherein the radar sensors (20.1 to 20.n) are optically recognizable on the visible side (18).

5. Method (32) for operating a hearing device (2) according to one of claims 1 to 4, wherein an operating gesture (B) is captured by means of the radar sensors (20.1 to 20.n) and a function of the hearing device (2) is then changed.

6. Method (32) according to claim 5, wherein the radar sensor arrangement (20), in response to a trigger signal, changes from a rest mode (32), in which the radar sensors (20.1 to 20.n) are not operated to capture the operating gesture (B), to an active mode (34), in which the radar sensors (20.1 to 20.n) are operated to capture the operating gesture (B).

## Revendications

1. Appareil auditif (2), en particulier prothèse auditive, avec un dispositif de capteurs radar (20) comportant au moins deux capteurs radar (20.1 à 20.n) pour la détection d'un geste de commande (B), dans lequel le dispositif de capteurs radar (20) comprend un dispositif de commande (22), qui comporte un multiplexeur (24) pour la sélection de l'un des capteurs radar (20. 1 à 20.n), dans lequel un amplificateur (26) est connecté en aval du multiplexeur (24), dans lequel un convertisseur analogique-numérique (28) est connecté en aval de l'amplificateur (26), et dans lequel le convertisseur analogique-numérique (28) comprend un démultiplexeur (29).

2. Appareil auditif (2) selon la revendication 1, dans lequel chaque capteur radar (20.1 à 20.n) comprend au moins une antenne radar (21), en particulier une antenne patch.

3. Appareil auditif (2) selon la revendication 1 ou 2, dans lequel il est prévu un générateur d'horloge (31), au moyen duquel le multiplexeur (24) et le démultiplexeur (29) sont sollicités.

4. Appareil auditif (2) selon l'une des revendications précédentes avec un boîtier (4) comportant une face visible (18), dans lequel les capteurs radar (20.1 à 20.n) sont disposés dans une paroi du boîtier, en particulier à fleur de la face visible (18), et/ou les capteurs radar (20.1 à 20.n) sont reconnaissables optiquement sur la face visible (18).

5. Procédé (32) de commande d'un appareil auditif (2) selon l'une des revendications 1 à 4, dans lequel un geste de commande (B) est détecté au moyen des capteurs radar (20.1 à 20.n) et une fonction de l'appareil auditif (2) est modifiée en suite.

6. Procédé (32) selon la revendication 5, dans lequel le dispositif de capteurs radar (20) passe, en réponse à un signal de déclenchement, d'un mode de repos (32), dans lequel les capteurs radar (20.1 à 20.n) ne sont pas actionnés pour détecter le geste de commande (B), à un mode actif (34), dans lequel les capteurs radar (20.1 à 20.n) sont actionnés pour détecter le geste d'actionnement (B).
